# EUROPÄISCHE PATENTSCHRIFT

(11) **EP 4 263 123 B1**
(45) Veröffentlichungstag und Bekanntmachung des Hinweises auf die Patenterteilung: **25.03.2026**
(21) Anmeldenummer: 21824310.3
(22) Anmeldetag: 30.11.2021
(51) Int. Cl.: B23Q 7/14

(54) **HANDHABUNGSSYSTEM ZUR HANDHABUNG VON WERKSTÜCKPALETTEN**
MANIPULATION SYSTEM FOR MANIPULATING PALLETS
SYSTEME DE MANIPULATION POUR MANIPULER DES PALETTES

(30) Priorität: 15.12.2020 DE 102020133542
(43) Veröffentlichungstag der Anmeldung: 25.10.2023
(73) Patentinhaber: DMG MORI Pfronten GmbH, 87459 Pfronten (DE)
(72) Erfinder: KÖCHL, Roland, 87459 Pfronten (DE)
(74) Vertreter: MERH-IP Matias Erny Reichl Hoffmann Patentanwälte PartG mbB
(86) Internationale Anmeldenummer: PCT/EP2021/083587
(87) Internationale Veröffentlichungsnummer: WO 2022/128451

(56) Entgegenhaltungen:
- WO-A2-2020/043916
- DE-A1- 102015 206 914
- US-A1- 2007 289 115

## Beschreibung

### Technisches Gebiet

Die vorliegende Erfindung betrifft ein Handhabungssystem mit Handhabungsvorrichtung zur Handhabung von Werkstückpaletten, sowie eine Werkzeugmaschine mit Handhabungssystem.

### Hintergrund der Erfindung

Aus dem Stand der Technik sind Handhabungssysteme zur Handhabung von werkstücktragenden Werkstückpaletten für den Einsatz in teil- oder vollautomatisierten Produktionsabläufen bekannt. Hierbei ist es stets wünschenswert, Handhabungssysteme bereitzustellen, die zum einen Werkstückpaletten auf eine möglichst vielseitige und effiziente Weise handhaben können und sich dabei zum anderen durch eine verhältnismäßig kompakte Bauweise auszeichnen.

Die möglichen Einsatzgebiete derartiger Handhabungssysteme erstrecken sich dabei unter anderem auf die Handhabung von Werkstückpaletten an einer Werkzeugmaschine, insbesondere im Zuge eines in einem Arbeitsraum der Werkzeugmaschine erfolgenden Palettenwechsels, oder auf die Handhabung in Verbindung mit einem Palettenspeicher oder einer Rüststation.

Ein Problem bekannter Handhabungssysteme ist, dass üblicherweise nur eine Werkstückpalette durch eine Handhabungsvorrichtung des Handhabungssystems bewegt wird, sodass beispielsweise ein Palettenwechsel im Arbeitsraum der Werkzeugmaschine eine Kombination mehrerer Verfahrbewegungen erforderlich macht, im Zuge derer eine auszuwechselnde Werkstückpalette zuerst von einer Aufnahmevorrichtung im Arbeitsraum aufgenommen und an einen Speicherplatz übergeben wird, bevor eine neue, einzuwechselnde Werkstückpalette von einem anderen Speicherplatz aufgenommen und an die Aufnahmevorrichtung im Arbeitsraum übergeben werden kann.

Andere Handhabungssysteme aus dem Stand der Technik setzen dabei auf die im Wesentlichen simultane Handhabung von zwei Werkstückpaletten, um so der zuvor beschriebenen Problematik zu begegnen und unter anderem die Anzahl erforderlicher Verfahrbewegungen zu reduzieren. Derartige Handhabungssysteme sind beispielsweise aus der DE 10 2015 206 914 A1 oder der US 2007 289 115 A1 bekannt, die den Einsatz eines verfahrbaren Palettenwechslers mit einer Aufnahmegabel mit zwei Aufnahmeplätzen für Werkstückpaletten an einer Werkzeugmaschine zeigen.

Je höher die Anzahl der simultan gehandhabten Werkstückpaletten ist, umso nachteiliger wirkt sich dies allerdings auf die Handhabungsvorrichtung selbst aus, da diese dadurch eine zusätzliche Belastung erfährt, die es bei der Auslegung und beim Einsatz des Handhabungssystems entsprechend zu berücksichtigen gilt.

### Zusammenfassung der Erfindung

Eine Aufgabe der vorliegenden Erfindung ist es daher, ein Handhabungssystem mit einer verbesserten simultanen Handhabung von mehreren Werkstückpaletten bereitzustellen.

Zur Lösung dieser Aufgabe wird ein Handhabungssystem mit Handhabungsvorrichtung nach Anspruch 1 vorgeschlagen.

Eine weitere Aufgabe der vorliegenden Erfindung ist zudem, eine Werkzeugmaschine mit einer verbesserten Möglichkeit zum Wechsel von Werkstückpaletten in einem Arbeitsraum der Werkzeugmaschine bereitzustellen.

Zur Lösung dieser Aufgabe wird eine Werkzeugmaschine mit Handhabungssystem nach Anspruch 14 vorgeschlagen.

Die jeweiligen abhängigen Ansprüche beziehen sich dabei auf bevorzugte Ausführungsformen des erfindungsgemäßen Handhabungssystem, der erfindungsgemäßen Handhabungsvorrichtung sowie der erfindungsgemäßen Werkzeugmaschine, die jeweils für sich genommen oder in Kombination bereitgestellt werden können.

Gemäß eines ersten Aspekts der Erfindung wird ein Handhabungssystem zur Handhabung von Werkstückpaletten bereitgestellt, das eine Handhabungsvorrichtung umfasst. Die Handhabungsvorrichtung umfasst eine Trägervorrichtung und eine von der Trägervorrichtung getragene Handhabungseinrichtung zur Handhabung von Werkstückpaletten, die eine Wechselvorrichtung mit mindestens zwei zur Aufnahme von Werkstückpaletten eingerichteten Aufnahmeplätzen aufweist. Die Handhabungseinrichtung ist zudem dazu eingerichtet, die Wechselvorrichtung derart relativ zur Trägervorrichtung entlang einer ersten Bewegungsrichtung zu verfahren, dass beide Aufnahmeplätze gemeinsam verfahren werden. Das Handhabungssystem ist dadurch gekennzeichnet, dass die Handhabungseinrichtung zusätzlich dazu eingerichtet ist, über mindestens eine Entkopplungsvorrichtung eine von der Handhabungseinrichtung gehandhabte, in einem der zumindest zwei Aufnahmeplätze aufgenommene Werkstückpalette derart von der Wechselvorrichtung zu entkoppeln, dass die entkoppelte Werkstückpalette ihre relative Position zur Trägervorrichtung während eines Verfahrens der Wechselvorrichtung entlang der ersten Bewegungsrichtung im Wesentlichen beibehält.

Unter Werkstückpaletten sind dabei zum Tragen von Werkstücken eingerichtete Paletten zu verstehen, die in eine Vielzahl von Aufnahmevorrichtungen mit üblicherweise standardisierten Aufnahmeschnittstellen eingesetzt werden können.

Unter einem Verfahren der Wechselvorrichtung entlang der ersten Bewegungsrichtung sind sowohl vorwärts als auch rückwärts gerichtete Verfahrbewegungen zu verstehen. In anderen Worten kann die Wechselvorrichtung entlang der ersten Bewegungsrichtung vor und zurück verfahren werden.

Unter dem Umstand, dass die zur Trägervorrichtung relative Position der entkoppelten Werkstückpalette "im Wesentlichen" beibehalten wird, ist zu verstehen, dass eine numerische Positionsangabe der entkoppelten Werkstückpalette bzgl. der Trägervorrichtung nicht über eine gesamte Verfahrbewegung der Wechselvorrichtung hinweg konstant bleiben muss, sondern sich diese durchaus innerhalb verformungs- und lagerungstypischer Grenzen bewegen kann. So sollen während des Verfahrens der Wechselvorrichtung beispielsweise durch elastische Bauteilverformungen der Handhabungsvorrichtung oder durch eine schwimmende Lagerung der entkoppelten Werkstückpalette bedingte Änderungen der besagten Positionsangabe zulässig sein, so lange diese dem Ziel, die Wechselvorrichtung im Zuge einer Verfahrbewegung relativ zur Trägervorrichtung zu verfahren, ohne dabei die entkoppelte Werkstückpalette in einem der Größenordnung der Verfahrbewegung ähnlichen Maß zu bewegen, nicht entgegenstehen.

Durch das erfindungsgemäße Handhabungssystem mit Handhabungsvorrichtung können in vorteilhafter Weise zumindest zwei Werkstückpaletten im Wesentlichen simultan durch das Handhabungssystem, insbesondere durch die Handhabungseinrichtung der Handhabungsvorrichtung, gehandhabt werden. Damit kann die Anzahl notwendiger Verfahrbewegungen im Zuge eines beliebig gestalteten Handhabungsprozesses deutlich reduziert werden, da beispielsweise eine erste Werkstückpalette nicht erst abgelegt werden muss, bevor eine zweite Werkstückpalette durch die Handhabungseinrichtung gehandhabt werden kann.

Weiterhin kann der zweite der mindestens zwei Aufnahmeplätze auch als zusätzlicher Ablageplatz für Werkstückpaletten genutzt werden, wodurch sich die maximale Anzahl der im Handhabungssystem befindlichen Werkstückpaletten zumindest um eins erhöhen lässt. So kann beispielsweise im Falle eines zum Handhabungssystem zugehörigen Palettenspeichers die Anzahl der speicherbaren bzw. ablegbaren Werkstückpaletten im Handhabungssystem um eins erhöht werden, ohne den Palettenspeicher selbst größer dimensionieren zu müssen.

Die Möglichkeit zur zusätzlichen Aufnahme mehrerer Werkstückpaletten bedingt zwangsläufig eine erhöhte Belastung der gesamten Handhabungsvorrichtung, da ein Gewicht einer einzelnen handzuhabenden Werkstückpalette üblicherweise bis zu 1,5 Tonnen oder mehr betragen kann. Das zusätzliche Gewicht weiterer Werkstückpaletten verursacht dabei nicht nur eine zusätzliche statische Belastung der Handhabungsvorrichtung, sondern auch eine zusätzliche dynamische Belastung während Verfahrbewegungen, denen in vorteilhafter Weise durch die erfindungsgemäße Ausgestaltung mit Entkopplungsvorrichtung begegnet wird, wie nachfolgend detailliert dargelegt.

Bevorzugt sind die Aufnahmeplätze in einem Ausgangszustand der Wechselvorrichtung derart in Relation zur übrigen Handhabungsvorrichtung angeordnet, dass eine weitestgehend symmetrische Anordnung der in den Aufnahmeplätzen aufgenommenen Werkstückpaletten vorliegt, insbesondere in Bezug auf die lasttragende Trägervorrichtung. In anderen Worten sind die Aufnahmeplätze in einem Ausgangszustand der Handhabungseinrichtung vorzugsweise symmetrisch in Bezug auf die Trägervorrichtung angeordnet.

So kann ein durch das Gewicht der Werkstückpaletten verursachtes, auf die Handhabungseinrichtung und damit auch auf die Trägervorrichtung wirkendes resultierendes Kippmoment im Ausgangszustand stark reduziert werden, da sich die jeweiligen einzelnen Kippmomente der Werkstückpaletten in den symmetrisch angeordneten Aufnahmeplätzen annähernd gegenseitig kompensieren.

Im Zuge einer Verfahrbewegung der Wechselvorrichtung aus dem Ausgangszustand heraus in einen ausgefahrenen Zustand findet zwangsläufig eine Umverteilung der getragenen Masse statt, da mit der Wechselvorrichtung auch die in den Aufnahmeplätzen aufgenommenen Werkstückpaletten in einen Zustand asymmetrischer Anordnung verfahren werden. Daraus resultiert unter anderem eine erhebliche Zunahme des resultierenden Kippmoments, da mit den Verfahrwegen der Wechselvorrichtung üblicherweise größere Distanzen überbrückt werden müssen, wodurch ein verhältnismäßig langer Hebelarm zwischen der die Handhabungseinrichtung tragenden Trägervorrichtung und den ausgefahrenen Aufnahmeplätzen der Wechselvorrichtung vorliegt. Gepaart mit der üblicherweise großen Masse der Werkstückpaletten, stellt das dadurch entstehende Kippmoment eine besonders auslegungsrelevante Größe dar.

Die im ausgefahrenen Zustand auf die Handhabungseinrichtung und damit auch auf die Trägervorrichtung zusätzlich wirkende Belastung führt sowohl zu erhöhten Materialbelastungen (im Sinne von Materialspannungen) als auch zu erhöhten Verformungen von Bauteilen der Handhabungsvorrichtung, insbesondere in Form von Biegung und/oder Torsion. Dies kann nicht nur nachteilig für die Lebensdauer der gesamten Handhabungsvorrichtung sein, sondern auch eine präzise Handhabung der Werkstückpaletten negativ beeinflussen, insbesondere bei einer Interaktion der Handhabungsvorrichtung mit anderen Aufnahmevorrichtungen für Werkstückpaletten.

Durch die erfindungsgemäße Entkopplungsvorrichtung kann vor einer Verfahrbewegung zumindest eine Werkstückpalette von der Wechselvorrichtung kinematisch entkoppelt werden, sodass Bewegungen der Wechselvorrichtung entlang der ersten Bewegungsrichtung nicht auf die entkoppelte Werkstückpalette übertragen werden. Die Handhabungseinrichtung trägt zwar weiterhin die von der Wechselvorrichtung entkoppelte Werkstückpalette, die Wechselvorrichtung selbst wird allerdings derart entlastet, dass diese die Masse der entkoppelten Werkstückpalette weder tragen noch bewegen muss. Die entkoppelte Werkstückpalette verbleibt im Zuge einer Verfahrbewegung der Wechselvorrichtung entlang der ersten Bewegungsrichtung, z.B. aus dem Ausgangszustand heraus in einen ausgefahrenen Zustand, im Wesentlichen an Ort und Stelle in Bezug auf die Trägervorrichtung.

Dies hat zur Folge, dass im Zuge einer Verfahrbewegung der Wechselvorrichtung weniger Kippmoment verursachende Masse bewegt wird, wodurch der zuvor beschriebene Effekt der Zunahme des resultierenden Kippmoments erheblich reduziert werden kann. Überdies kann die entkoppelte Werkstückpalette in vorteilhafter Weise als Gegengewicht zu den übrigen durch die Wechselvorrichtung verfahrenen Werkstückpaletten fungieren, um das resultierende Kippmoment zusätzlich zu reduzieren.

Auf diese Weise kann das resultierende Kippmoment im ausgefahrenen Zustand im Vergleich zu einem gemeinsamen Verfahren aller aufgenommenen Werkstückpaletten erheblich reduziert werden, was sich wiederum positiv auf die Belastung und Verformung der einzelnen Bauteile der Handhabungsvorrichtung auswirkt, sodass beispielsweise die Wechselvorrichtung oder die Trägervorrichtung materialsparender ausgeführt werden können.

Ferner wird in vorteilhafter Weise auch eine dynamische Belastung der Handhabungsvorrichtung verringert, da mit der Reduktion der zu bewegenden Masse auch Trägheitseffekte wesentlich geringer ausfallen (im Falle von zwei Aufnahmeplätzen werden diese sogar nahezu halbiert), sodass beispielsweise eine niedriger Antriebsleistung einer Antriebsvorrichtung der Wechselvorrichtung benötigt wird oder kürzere Verfahrzeiten mit stärker ausgeprägten Beschleunigungs- und/oder Abbremsvorgängen umgesetzt werden können. In anderen Worten wird durch eine Reduktion der zu bewegenden Masse eine schnellere und präzisere bewegungsbasierte Handhabung der Werkstückpaletten ermöglicht.

Die Handhabungsvorrichtung des erfindungsgemäßen Handhabungssystems bietet somit die Möglichkeit, mehrere Werkstückpaletten im Wesentlichen simultan zu handhaben und dabei eine damit verbundene zusätzliche Belastung möglichst gering zu halten, um so nicht nur die Anzahl notwendiger Verfahrbewegungen zu senken, sondern auch eine schnelle und präzise Handhabung der Werkstückpaletten zu gewährleisten. In anderen Worten kann eine mechanische Gesamtbelastung der Handhabungsvorrichtung erheblich reduziert werden, ohne dabei auf die Möglichkeit der im Wesentlichen simultanen Handhabung mehrerer Werkstückpaletten verzichten zu müssen.

Unter der "im Wesentlichen simultanen Handhabung" ist dabei nicht zu verstehen, dass die Werkstückpaletten stets gleichzeitig bewegt werden müssen. Vielmehr ist darunter die prinzipielle Möglichkeit zu verstehen, die mehreren von der Handhabungseinrichtung aufgenommenen und gehandhabten Werkstückpaletten im Zuge von Verfahrbewegungen der Handhabungseinrichtung und der Wechselvorrichtung teilweise gemeinsam oder kurz nacheinander bewegen zu können.

Die Entkopplungsvorrichtung ist selbstverständlich auch dazu eingerichtet, die entkoppelte Werkstückpalette wieder einzukoppeln, sodass diese wieder durch die Wechselvorrichtung entlang der ersten Bewegungsrichtung verfahren werden kann.

Vorzugsweise verläuft die erste Bewegungsrichtung der Wechselvorrichtung in einer horizontalen Richtung, parallel zu einer Bodenfläche.

Dadurch werden die durch die Wechselvorrichtung entlang der ersten Bewegungsrichtung zu bewegenden Werkstückpaletten stets senkrecht (oder zumindest nahezu senkrecht) zum Schwerefeld der Erde bewegt, sodass eine Antriebsvorrichtung der Wechselvorrichtung nicht direkt gegen die in vertikaler Richtung wirkende Gewichtskraft arbeiten muss.

Die Richtungsangaben "vertikal" und "horizontal" sind dabei stets als relationale Richtungsangaben gegenüber einer Bodenfläche zu verstehen, auf der das erfindungsgemäße Handhabungssystem angeordnet ist, wobei "horizontal" im Wesentlichen eine parallele Ausrichtung und "vertikal" eine senkrechte Ausrichtung zur Bodenfläche bezeichnet. Die vertikale Richtung verläuft dabei üblicherweise parallel zur Richtung des Schwerfelds der Erde.

Vorzugsweise umfasst die Handhabungseinrichtung eine erste Antriebseinheit, über die die Wechselvorrichtung angetrieben wird, um diese entlang der ersten Bewegungsrichtung zu verfahren. Bevorzugt umfasst die Antriebsvorrichtung dabei einen Kettenantrieb, der eine platzsparende Übertragung von Antriebskräften und/oder -momenten ermöglicht.

In einer bevorzugten Ausführungsform ist die Handhabungsvorrichtung dazu eingerichtet, eine in einem der mindestens zwei Aufnahmeplätze aufgenommene Werkstückpalette an mindestens eine zur Aufnahme von Werkstückpaletten eingerichtete Zielvorrichtung zu übergeben und/oder eine von der mindestens einen Zielvorrichtung aufgenommene Werkstückpalette in einen der mindestens zwei Aufnahmeplätze aufzunehmen.

Dadurch wird die Interaktionsmöglichkeit der Handhabungsvorrichtung mit anderen Vorrichtungen bzw. Zielvorrichtungen geschaffen, im Zuge derer Werkstückpaletten zwischen diesen bewegt oder gewechselt werden können. Auf diese Weise ermöglicht das Handhabungssystem eine umfassende und vor allem automatisiert ablaufende Handhabung von Werkstückpaletten, die zwischen der Handhabungsvorrichtung und ein oder mehreren Zielvorrichtungen bewegt und auch gewechselt werden können. So können notwendige Wechselprozesse von Werkstückpaletten im Rahmen einer voll- und/oder teilautomatisierten Fertigung optimiert werden, um sowohl Fertigungszeiten als auch Produktionskosten zu senken.

Die Zielvorrichtungen sind dabei stets zur Aufnahme und zum Tragen von Werkstückpaletten eingerichtet. Vorzugsweise umfassen die Zielvorrichtungen Aufnahmemittel für an den Werkstückpaletten angeordnete Positionierungsmittel, mit denen die Werkstückpalette gegenüber einer Zielvorrichtung auf vorbestimmte Weise eindeutig positioniert werden kann, wodurch eine darauffolgende Interaktion einer beliebigen weiteren Vorrichtung, die üblicherweise stark von einer korrekten und eindeutigen Positionierung der Werkstückpalette abhängt, verbessert werden kann. Alternativ können auch die Zielvorrichtungen die Positionierungsmittel umfassen und die Werkstückpaletten die zugehörigen Aufnahmemittel.

Vorzugsweise handelt es sich bei der mindestens einen Zielvorrichtung (nicht beschränkend) um eine Zielvorrichtung aus einer Gruppe von Zielvorrichtungen, die
- eine Aufnahmevorrichtung einer Werkzeugmaschine,
- eine Aufnahmevorrichtung einer Rüststation,
- eine Haltevorrichtung einer Transportvorrichtung zum Transport von Werkstückpaletten,
- ein Speicher- und/oder Ablageplatz zur Zwischenspeicherung von Werkstückpaletten
umfasst.

Vorzugsweise ist die Handhabungsvorrichtung dazu eingerichtet, mit jeder der in der Gruppe von Zielvorrichtungen genannten Zielvorrichtungen auf die beschriebene Weise (Aufnahme und/oder Übergabe von Werkstückpaletten) zu interagieren.

In einer besonders bevorzugten Ausführungsform ist die mindestens eine Zielvorrichtung eine in einem Arbeitsraum einer zum Handhabungssystem benachbart aufgestellten Werkzeugmaschine angeordnete Aufnahmevorrichtung.

Dadurch kann eine von der Handhabungsvorrichtung gehandhabte Werkstückpalette unter anderem direkt in den Arbeitsraum der Werkzeugmaschine in eine für eine anschließende Werkstückbearbeitung geeignete Position verbracht werden und nach einer erfolgten Werkstückbearbeitung durch die Werkzeugmaschine auch wieder direkt aus dem Arbeitsraum entnommen werden. So können Wechselprozesse von Werkstückpaletten im Zuge einer automatisierten Bearbeitung der darauf aufgespannten Werkstücke erheblich verkürzt werden.

Vorzugsweise ist das Handhabungssystem dabei als Teil der Werkzeugmaschine ausgeführt. Dadurch können die Werkzeugmaschine bzw. der Arbeitsraum der Werkzeugmaschine und die Handhabungsvorrichtung des Handhabungssystems von vornherein passend aufeinander abgestimmt werden, sodass beispielsweise der in einer Fertigungshalle eingenommene Aufstellraum reduziert werden kann oder eine Abdichtung des Arbeitsraums an einer Schnittstelle zwischen Arbeitsraum und Handhabungsvorrichtung optimiert werden kann.

Alternativ kann das Handhabungssystem auch als Addon-Lösung an bereits bestehenden bzw. aufgestellten Werkzeugmaschinen bereitgestellt werden, sodass diese ohne Probleme um die durch das erfindungsgemäße Handhabungssystem gebotenen Möglichkeiten zur Handhabung von Werkstückpaletten erweitert werden können.

Der Einsatz des erfindungsgemäßen Handhabungssystems ist dabei in keinerlei Weise auf den Einsatz an einer Werkzeugmaschine beschränkt, sondern kann unter anderem in Lagerungssystemen zum Einsatz kommen, die beispielsweise in der Fertigungshalle oder aber in einer separaten Lagerungshalle aufgestellt sein können. Beispielsweise kann durch das Handhabungssystem in einem solchen Fall in vorteilhafter Weise ein automatisiertes Bestücken (und/oder Entnehmen) von Transportvorrichtungen verbessert (im Grunde beschleunigt) werden, die unter anderem zum Transport von Werkstückpaletten zu und von Werkzeugmaschinen und/oder Bearbeitungszentren eingerichtet sind, wodurch Zeit und damit verbundene Kosten eingespart werden können.

In einer besonders bevorzugten Ausführungsform umfasst die mindestens eine Entkopplungsvorrichtung eine Hubvorrichtung, die dazu eingerichtet ist, eine in einem der mindestens einen Entkopplungsvorrichtung zugeordneten Aufnahmeplatz aufgenommene Werkstückpalette durch eine vertikal gerichtete Hubbewegung von der Wechselvorrichtung zu entkoppeln.

Unter dem zugeordneten Aufnahmeplatz der Entkopplungsvorrichtung ist dabei derjenige Aufnahmeplatz der Wechselvorrichtung zu verstehen, dessen darin aufgenommene Werkstückpalette durch die Entkopplungsvorrichtung in einem festgelegten Zustand der Wechselvorrichtung von dieser entkoppelt werden kann. Insbesondere handelt es sich bei diesem festgelegten Zustand der Wechselvorrichtung um den Ausgangszustand der Wechselvorrichtung.

Ein Anheben der Werkstückpalette durch die Hubbewegung stellt dabei eine effiziente Möglichkeit dar, eine kinematische Entkopplung von der Wechselvorrichtung zu bewerkstelligen, z.B. mit Hilfe translatorisch verfahrbarer Aktoren (Linearaktoren). So kann eine zur Entkopplung notwendige Kinematik mit Hilfe der Hubvorrichtung einfach und kostengünstig gehalten werden.

Selbstverständlich ist die Hubvorrichtung auch dazu eingerichtet, die entkoppelte Werkstückpalette durch eine der Hubbewegung entgegengesetzte Absenkbewegung wieder in die Wechselvorrichtung einzukoppeln, sodass Bewegungen der Wechselvorrichtung wieder übertragen werden können.

Vorzugsweise weist die Wechselvorrichtung an den mindestens zwei Aufnahmeplätzen jeweils mehrere Auflageabschnitte auf, auf denen die jeweils aufgenommene Werkstückpalette aufliegt. Ferner kann die Wechselvorrichtung zusätzlich Begrenzungsabschnitte aufweisen, die dazu eingerichtet sind, eine Bewegung einer jeweiligen auf den Auflageabschnitten aufliegenden Werkstückpallette relativ zu den Auflageabschnitten zu begrenzen. Dadurch wird ein Herunterrutschen der Werkstückpalette im Zuge einer Bewegung der Wechselvorrichtung und/oder der Handhabungseinrichtung selbst durch Formschluss zuverlässig verhindert. Üblicherweise sind die Auflageabschnitte dabei horizontal angeordnet und die Begrenzungsabschnitte sind winklig zu den Auflageabschnitten - insbesondere senkrecht - angeordnet.

Durch die Hubbewegung der Hubvorrichtung wird die Werkstückpalette dabei von den Auflageabschnitten angehoben, sodass eine Bewegung der Wechselvorrichtung entlang der ersten Bewegungsrichtung nicht länger auf die angehobene und damit entkoppelte Werkstückpalette übertragen werden kann.

Vorzugsweise umfasst die Hubvorrichtung der mindestens einen Entkopplungsvorrichtung mehrere Hubelemente, insbesondere fünf, die symmetrisch bezüglich der Entkopplungsvorrichtung angeordnet sind und jeweils eine Antriebsvorrichtung umfassen, die jeweils dazu eingerichtet ist, durch translatorisches Verfahren die Hubbewegung zu bewirken.

Dadurch kann die zu entkoppelnde Last gleichmäßig auf mehrere Antriebsvorrichtungen verteilt werden. Ferner kann durch die symmetrische Anordnung der Hubelemente ein Verkippen der Werkstückpalette im Zuge der Hubbewegung zuverlässig verhindert werden.

Vorzugsweise ist eine Antriebsvorrichtung der Hubvorrichtung der mindestens einen Entkopplungsvorrichtung, insbesondere eine Antriebsvorrichtung der einzelnen Hubelemente, selbsthemmend ausgeführt, dergestalt, dass eine Beibehaltung der Position der Hubvorrichtung unabhängig von einer Energieversorgung der Antriebsvorrichtung der Hubvorrichtung erfolgt.

Dadurch ist keine permanente Energieversorgung der Antriebsvorrichtung der Entkopplungsvorrichtung bzw. der Hubvorrichtung notwendig, um die entkoppelte Werkstückpalette in Position zu halten. So können nicht nur Energiekosten reduziert werden, sondern es wird im Falle einer ggf. unbeabsichtigten Unterbrechung der Energieversorgung ein Herabsenken der Hubvorrichtung verhindert.

In einer besonders bevorzugten Ausführungsform umfasst die mindestens eine Entkopplungsvorrichtung zumindest eine Aufnahme für Positionierungsmittel, die dazu eingerichtet ist, im Zuge der Hubbewegung derart in ein Positionierungsmittel, das auf einer Unterseite einer im zugeordneten Aufnahmeplatz aufgenommenen Werkstückpalette angeordnet ist, einzugreifen, dass eine Position und Orientierung der durch die Hubbewegung entkoppelten Werkstückpalette gegenüber der mindestens einen Entkopplungsvorrichtung eindeutig festgelegt ist.

Vorzugsweise umfasst die Entkopplungsvorrichtung dabei ein bis sechs Aufnahmen für Positionierungsmittel, insbesondere vier, die symmetrisch bezüglich der Entkopplungsvorrichtung angeordnet sind.

Dadurch ist die Position der entkoppelten Werkstückpalette bzw. ihres Schwerpunktes auf der Handhabungseinrichtung eindeutig vorgegeben, sodass eine ungleichmäßige Belastung der Handhabungseinrichtung im Zuge der Entkopplung verhindert oder zumindest reduziert werden kann.

Ferner kann im Zuge einer erneuten Einkopplung der entkoppelten Werkstückpalette diese auf kontrollierte Weise in eine festgelegte Position im Aufnahmeplatz abgesetzt werden. Dadurch wird nicht nur eine durch die Entkopplung möglicherweise verursachte Abweichung von einer Soll-Position im Aufnahmeplatz vermieden, sondern die Entkopplungsvorrichtung kann in vorteilhafter Weise auch dazu eingesetzt werden, eine Position einer unter Umständen fehlerhaft aufgenommenen Werkstückpalette (also in eine Position, die nicht der Soll-Position entspricht) im Nachgang an eine Aufnahme in einen der mindestens zwei Aufnahmeplätze zu korrigieren.

In einer besonders bevorzugten Ausführungsform umfasst die Handhabungseinrichtung mehrere Entkopplungsvorrichtungen, wobei jedem Aufnahmeplatz der Wechselvorrichtung jeweils eine der mehreren Entkopplungsvorrichtungen zugeordnet ist.

Dadurch kann in vorteilhafter Weise eine in einem jeden Aufnahmeplatz der Wechselvorrichtung aufgenommene Werkstückpalette separat von der Wechselvorrichtung entkoppelt werden. So können die zuvor angeführten Vorteile des Einsatzes der Entkopplungsvorrichtung auf jeden Aufnahmeplatz der Wechselvorrichtung ausgedehnt werden.

In einer besonders bevorzugten Ausführungsform ist die Wechselvorrichtung als horizontal ausfahrbare Teleskopvorrichtung ausgeführt, die mindestens einen relativ zu mindestens einer Teleskopschiene der Teleskopvorrichtung horizontal in der ersten Bewegungsrichtung verfahrbaren Teleskopschlitten umfasst, auf dem die mindestens zwei Aufnahmeplätze angeordnet sind.

Üblicherweise erfolgt aus Gründen der Lagerung die Ausgestaltung des Teleskopmechanismus der Teleskopvorrichtung mit zwei Teleskopschienen, also einem Paar von Teleskopschienen, auf denen der mindestens eine Teleskopschlitten verfahrbar gelagert ist.

Vorzugsweise umfasst die Teleskopvorrichtung zwei Paar Teleskopschienen und zwei Teleskopschlitten, wobei ein erster Teleskopschlitten in einem ersten Paar von Teleskopschienen verfahrbar entlang der ersten Bewegungsrichtung gelagert ist und ein zweiter Teleskopschlitten, auf dem die mindestens zwei Aufnahmeplätze angeordnet sind, in einem zweiten, auf dem ersten Teleskopschlitten angeordneten Paar von Teleskopschienen ebenfalls verfahrbar entlang der ersten Bewegungsrichtung gelagert ist. In anderen Worten umfasst die Teleskopvorrichtung bevorzugt einen doppelten Teleskopauszug.

Durch die Ausführung der Wechselvorrichtung als Teleskopvorrichtung, insbesondere mit doppeltem Teleskopauszug, können in einem ausgefahrenen Zustand der Wechselvorrichtung nicht nur verhältnismäßig große Distanzen in der ersten Bewegungsrichtung überbrückt werden, sondern es wird zeitglich auch ein verhältnismäßig steifer Aufbau realisiert, der eine Durchbiegung der Wechselvorrichtung im ausgefahrenen Zustand minimiert.

Vorzugsweise kann die Steifigkeit der Wechselvorrichtung zusätzlich erhöht werden, in dem die zu einer Ausfahrrichtung (entspricht der ersten Bewegungsrichtung) senkrecht stehenden Querschnittsgeometrien der Teleskopschlitten derart ausgestaltet sind, dass die Teleskopschlitten eine hohe Biege- und/oder Torsionssteifigkeit aufweisen.

In einer besonders bevorzugten Ausführungsform ist die Handhabungsvorrichtung dazu eingerichtet, die Handhabungseinrichtung relativ zur Trägervorrichtung über eine translatorische Antriebsvorrichtung entlang einer vertikal ausgerichteten Verfahrrichtung translatorisch zu verfahren.

Dadurch wird die Bewegungsmöglichkeit der Handhabungsvorrichtung um einen zusätzlichen Freiheitsgrad (hoch und runter entlang vertikalen Verfahrrichtung) erweitert, sodass komplexere Bewegungsabläufe bei der Handhabung der Werkstückpaletten umgesetzt werden können.

Vorzugsweise umfasst die translatorische Antriebsvorrichtung eine vertikal ausgerichtete Führungsspindel, die über eine zweite Antriebseinheit angetrieben wird.

In einer besonders bevorzugten Ausführungsform ist die Trägervorrichtung rahmenförmig ausgestaltet mit einem Bodenelement, zwei Seitenelementen und einem Kopfelement, wobei die zwei Seitenelemente jeweils mindestens zwei Führungsschienen umfassen, über die die von der Trägervorrichtung getragene Handhabungseinrichtung verfahrbar entlang der vertikal ausgerichteten Verfahrrichtung gelagert ist.

Der rahmenförmige Aufbau der Trägervorrichtung bedingt eine hohe Biege- und Torsionssteifigkeit der Trägervorrichtung und reduziert damit belastungsbedingte Verformungen, insbesondere bei einer durch das im ausgefahrenen Zustand wirkende resultierende Kippmoment. Durch die jeweils beidseitig doppelte Lagerung mit den Führungsschienen wird insbesondere im ausgefahrenen Zustand eine optimale Lagerung der gesamten Handhabungseinrichtung inklusive Wechselvorrichtung gewährleistet. Zusätzlich kann ein Verkeilen der Handhabungseinrichtung im Zuge einer Verfahrbewegung entlang der vertikal ausgerichteten Verfahrrichtung verhindert werden.

Die Handhabungseinrichtung ist zumindest teilweise in einem von der rahmenförmigen Trägervorrichtung teilweise umschlossenen Bereich angeordnet, insbesondere ragt die Handhabungseinrichtung jeweils aus einer vorderen und einer hinteren Grenzfläche des umschlossenen Bereichs heraus. Die erste Bewegungsrichtung verläuft dabei parallel zum Boden- und/oder Kopfelement durch die vordere und hintere Grenzfläche hindurch. In anderen Worten kann die Wechselvorrichtung jeweils vor und zurück durch eine Öffnung der rahmenförmigen Trägervorrichtung verfahren werden.

Durch diesen Gesamtaufbau wird eine verbesserte, im Ausgangszustand sogar symmetrische Lasteinleitung in die Trägervorrichtung ermöglicht, die zusätzlich zur hohen Steifigkeit des Aufbaus eine präzise Platzierung der gehandhabten Werkstückpaletten begünstigt.

In einer besonders bevorzugten Ausführungsform umfasst die Handhabungsvorrichtung eine die Trägervorrichtung tragende Sockelvorrichtung, wobei die Handhabungsvorrichtung dazu eingerichtet ist, die Trägervorrichtung relativ zur Sockelvorrichtung über eine rotatorische Antriebsvorrichtung um eine vertikal ausgerichtete Rotationsachse zu verdrehen.

Dadurch wird die Bewegungsmöglichkeit der Handhabungsvorrichtung um einen zusätzlichen Freiheitsgrad erweitert, sodass komplexere Bewegungsabläufe bei der Handhabung der Werkstückpaletten umgesetzt werden können, insbesondere mit Hilfe einer Rotation der gesamten Trägervorrichtung inklusive Handhabungseinrichtung.

Vorzugsweise umfasst die Handhabungsvorrichtung eine dritte Antriebseinheit zum Antreiben der rotatorischen Antriebsvorrichtung.

Vorzugsweise umfasst die Handhabungsvorrichtung des Handhabungssystems eine elektronische Steuervorrichtung, die mit der Wechselvorrichtung, der Entkopplungsvorrichtung und der in der jeweiligen Ausführungsform vorhandenen rotatorischen und/oder translatorischen Antriebsvorrichtung gekoppelt ist und dazu eingerichtet ist, die gekoppelten Vorrichtungen, insbesondere die erste, zweite und oder dritte Antriebseinheit, anzusteuern.

Bevorzugt ist die Steuerungsvorrichtung dazu eingerichtet, die gekoppelte Wechselvorrichtung, die gekoppelten Antriebsvorrichtungen und die gekoppelte Entkopplungsvorrichtung gleichzeitig anzusteuern.

Dadurch können im Zuge der Handhabung erfolgende Verfahrbewegungen der Handhabungsvorrichtung, insbesondere eines Aufnahmeplatzes, von einer Ausgangsposition zu einer Zielposition dahingehend optimiert werden, dass keine sequentielle Ansteuerung der einzelnen Antriebsvorrichtungen erfolgt, sondern kombinierte Bewegungsabläufe ermöglicht werden. So kann beispielsweise die Wechselvorrichtung in den Ausgangszustand zurückgefahren werden, während die Handhabungseinrichtung entlang der vertikal ausgerichteten Verfahrrichtung verfahren wird. Oder es kann eine Entkopplung einer bereits aufgenommenen Werkstückpalette erfolgen, während die Trägervorrichtung zur Vorbereitung der Aufnahme einer weiteren Werkstückpalette verdreht wird. Auf diese Weise können die Verfahrwege und die Verfahrzeiten im Zuge der Handhabung von Werkstückpaletten erheblich reduziert werden.

In einer besonders bevorzugten Ausführungsform ist die Handhabungsvorrichtung dazu eingerichtet, einen der mindestens zwei Aufnahmeplätze durch Verfahrbewegungen der Handhabungseinrichtung entlang der vertikal ausgerichteten Verfahrrichtung und/oder durch Verdrehbewegungen um die vertikal ausgerichtete Rotationsachse und/oder durch Verfahrbewegungen der Wechselvorrichtung entlang der ersten Bewegungsrichtung derart gegenüber der mindestens einen Zielvorrichtung zu positionieren, dass eine von der Zielvorrichtung aufgenommene Werkstückpalette von der Wechselvorrichtung in dem positionierten Aufnahmeplatz aufgenommen und/oder eine im positionierten Aufnahmeplatz aufgenommene Werkstückpalette an die Zielvorrichtung übergeben werden kann.

Dadurch stehen drei Freiheitsgrade zur Verfügung (2 translatorische + 1 rotatorischer Freiheitsgrad), um eine aufgenommene Werkstückpalette oder einen leeren Aufnahmeplatz gegenüber einer Zielvorrichtung in drei Raumrichtungen auszurichten. Die Bewegungen können prinzipiell sowohl entlang der ersten Bewegungsrichtung als auch entlang der vertikalen Verfahrrichtung vor und zurück bzw. hoch und runter erfolgen sowie im oder gegen den Uhrzeigersinn im Falle einer Verdrehbewegung um die Rotationsachse.

Vorzugsweise ist die Handhabungsvorrichtung dabei dazu eingerichtet, eine Werkstückpalette in einem der mindestens zwei Aufnahmeplätze durch eine Verfahrbewegung entlang der vertikal ausgerichteten Verfahrrichtung in eine Zielvorrichtung abzusetzen und/oder eine in der Zielvorrichtung befindliche Werkstückpalette durch eine Verfahrbewegung entlang der vertikal ausgerichteten Verfahrrichtung aus der Zielvorrichtung herauszuheben.

In einer besonders bevorzugten Ausführungsform umfasst das Handhabungssystem einen Palettenspeicher mit einer Vielzahl von zur Aufnahme von Werkstückplatten eingerichteten Speicherplätzen, die jeweils Zielvorrichtungen für die Handhabungsvorrichtung sind.

Durch den Palettenspeicher umfasst das Handhabungssystem eine Vielzahl von Speicherplätzen, in denen jeweils eine Werkstückpalette abgelegt und zwischengelagert werden kann, bevor diese wieder von der Handhabungsvorrichtung bzw. der Handhabungseinrichtung aufgenommen wird. So können beispielsweise Wechselprozesse an einer Werkzeugmaschine optimiert werden, da eine Bestückung der Werkzeugmaschine direkt aus einem der zahlreichen Speicherplätze mit zwischengelagerten Werkstückpaletten erfolgen kann.

In einer besonders bevorzugten Ausführungsform umfasst das Handhabungssystem eine Andockvorrichtung, die zum Andocken eines fahrerlosen Transportfahrzeugs mit mindestens einer zur Aufnahme von Werkstückpaletten eingerichteten Haltevorrichtung eingerichtet ist, wobei die mindestens eine Haltevorrichtung des Transportfahrzeugs in einem an die Andockvorrichtung angedockten Zustand eine Zielvorrichtung für die Handhabungsvorrichtung ist.

Durch die Möglichkeit zur Anbindung eines fahrerlosen Transportfahrzeugs an das Handhabungssystem über die Andockvorrichtung können die Möglichkeiten zur Handhabung von Werkstückpaletten weiter ausgebaut werden. Das Handhabungssystem kann in vorteilhafter Weise über ein oder mehrere fahrerlose Transportfahrzeuge mit neuen Werkstückpaletten versorgt werden, oder es können nicht mehr benötigte Werkstückpaletten aus dem Handhabungssystem abtransportiert werden. Dadurch kann das Handhabungssystem um eine Schnittstelle zur Angliederung an ein teil- oder vollautomatisiertes Transportnetzwerk zum Transport von Werkstückpaletten in ein oder mehreren Fertigungshallen erweitert werden. Dies bewährt sich besonders in Kombination mit der erfindungsgemäßen Ausgestaltung der Handhabungsvorrichtung zur schnellen flexiblen und präzisen Handhabung von Werkstückpaletten, da angedockte Transportvorrichtungen schneller be- und/oder entladen werden können, wodurch sich die Andockzeiten (Zeit im angedockten Zustand) der Transportfahrzeuge verkürzt und es kann eine höhere Durchsatzrate an Werkstückpaletten im gesamten Transportnetzwerk erzielt werden. So kann beispielsweise eine vom fahrerlosen Transportfahrzeug angelieferte Werkstückpalette in einen leeren Aufnahmeplatz der Handhabungsvorrichtung bzw. der Wechselvorrichtung aufgenommen werden und in direktem Anschluss kann eine bereits in der Wechselvorrichtung befindliche, nicht mehr benötigte Werkstückpalette and das Transportfahrzeug zum Abtransport übergeben werden, ohne dass eine der betreffenden Palette zwischenzeitlich von der Handhabungseinrichtung abgelegt werden muss.

Vorzugsweise umfasst das Handhabungssystem zudem ein oder mehrere fahrerlose Transportfahrzeuge, die jeweils mindestens eine Haltevorrichtung für Werkstückpaletten umfassen und dazu eingerichtet sind, an die Andockvorrichtung des Handhabungssystems derart anzudocken, dass die mindestens eine Haltevorrichtung als Zielvorrichtung des Handhabungssystems fungiert.

Dadurch umfasst das erfindungsgemäße Handhabungssystem in vorteilhafter Weise ein Transportnetzwerk aus ein oder mehreren fahrerlosen Transportfahrzeugen, mit denen selbst große räumliche Distanzen im Zuge einer Handhabung von Werkstückpaletten überwunden werden können, was ebenso eine Verbesserung im Sinne der simultanen Handhabung mehrerer Werkstückpaletten darstellt, die simultan durch die Transportfahrzeuge und die Handhabungsvorrichtung des Handhabungssystems bewegt werden können.

Unter dem fahrerlosen Transportfahrzeug ist dabei ein Fahrzeug zu verstehen, das selbstständig und automatisiert verfährt, vorzugsweise entlang eines virtuellen Leitnetzwerks unabhängig von einer physischen Führungs- oder Leitvorrichtung.

Gemäß eines weiteren Aspekts der Erfindung wird eine Werkzeugmaschine bereitgestellt, die einen Arbeitsraum mit mindestens einer darin angeordneten, zur Aufnahme von Werkstückpaletten eingerichteten Aufnahmevorrichtung und ein zum Arbeitsraum benachbart angeordnetes Handhabungssystem gemäß eines ersten Aspekts der Erfindung umfasst, wobei die mindestens eine im Arbeitsraum angeordnete Aufnahmevorrichtung eine Zielvorrichtung des Handhabungssystems ist.

Dadurch können die Werkzeugmaschine bzw. der Arbeitsraum der Werkzeugmaschine und das Handhabungssystem von vornherein passend aufeinander abgestimmt werden, insbesondere für einen Palettenwechsel im Arbeitsraum.

Mithilfe des Handhabungssystems kann dabei ein Palettenwechsel innerhalb kürzester Zeit erfolgen, da unnötige Verfahrbewegungen, z.B. eine vorherige Ablage der aus dem Arbeitsraum entnommenen Werkstückpalette, vermieden werden. So kann beispielsweise die Handhabungsvorrichtung die Werkstückpalette aus dem Arbeitsraum in einen leeren Aufnahmeplatz der Wechselvorrichtung aufnehmen und direkt im Anschluss eine in einem weiteren Aufnahmeplatz aufgenommene Werkstückpalette in den Arbeitsraum einwechseln, ohne die entnommene Werkstückpalette vorher ablegen zu müssen.

Ferner kann das Handhabungssystem innerhalb eines Gehäuses der Werkzeugmaschine angeordnet sein, sodass die Werkzeugmaschine mit Handhabungssystem eine nach außen abgeschlossene, einzelne Baugruppe ist. So können unter anderem Kosten gegenüber einer separaten Ausführung von Werkzeugmaschine und Handhabungssystem eingespart werden und ein in einer Fertigungshalle eingenommener Aufstellraum kann reduziert werden.

Vorzugsweise kann der Zugang der Handhabungsvorrichtung des Handhabungssystems zum Arbeitsraum der Werkzeugmaschine durch eine Klappen- oder Türeinheit verschlossen werden, sodass bei einer Bearbeitung im Arbeitsraum anfallende Verunreinigungen nicht in eine Umgebung des Handhabungssystems gelangen, wodurch Beschädigungen des Handhabungssystems vermieden werden können.

Weitere Aspekte und deren Vorteile als auch speziellere Ausführungsbeispiele der zuvor genannten Aspekte und Merkmale werden im Folgenden unter Zuhilfenahme der in den beigefügten Figuren gezeigten Zeichnungen beschrieben:
- Figur 1: zeigt eine Ausführungsform des Handhabungssystems mit Handhabungsvorrichtung, Palettenspeicher und Rüststation.
- Figur 2: zeigt einen unteren Teil einer im Wesentlichen der Handhabungsvorrichtung des Handhabungssystems aus Figur 1 entsprechenden Handhabungsvorrichtung in einem mit Werkstückpaletten unbeladenen Zustand.
- Figuren 3a bis 3c: zeigen den unteren Teil der Handhabungsvorrichtung aus Figur 2 in einem mit Werkstückpaletten beladenen Zustand.

Gleiche bzw. ähnliche Elemente in den Figuren können hierbei mit gleichen Bezugszeichen bezeichnet sein, manchmal allerdings auch mit unterschiedlichen Bezugszeichen.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der Ansprüche hervorgehen.

### Ausführliche Figurenbeschreibung

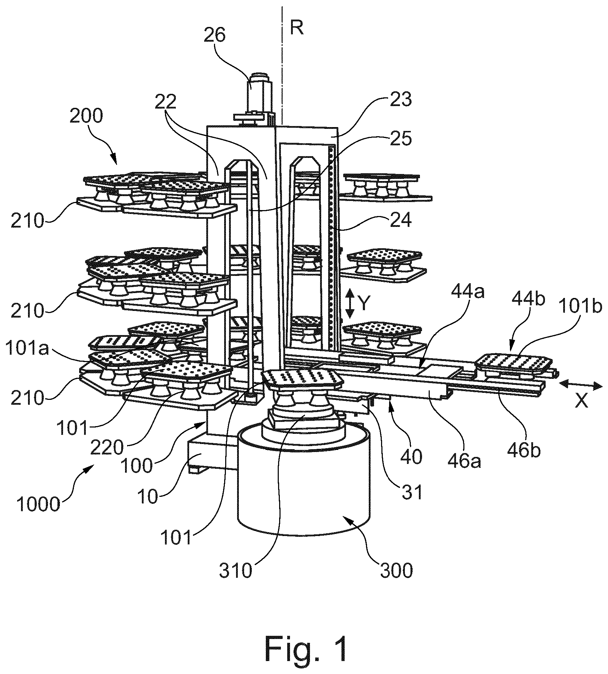

Fig. 1 zeigt eine Ausführungsform des Handhabungssystems 1000 mit einer Handhabungsvorrichtung 100, einem Palettenspeicher 200 und einer Rüststation 300.

Die Handhabungsvorrichtung 100 umfasst einen Sockel 10, eine mit diesem verbundene rahmenförmig gestaltete Trägervorrichtung 20 und eine von der Trägervorrichtung 20 getragene Handhabungseinrichtung 30 zur Handhabung von Werkstückpaletten 101, insbesondere einer im abgebildeten Zustand momentan gehandhabten ersten und einer zweiten Werkstückpalette 101a und 101b.

Der Sockel 10 ist auf einer Bodenfläche aufgestellt und kann mit diesem über geeignete, hier nicht dargestellte Befestigungsmittel verbunden sein, um die Stabilität der gesamten Handhabungsvorrichtung 100 zu erhöhen.

Die Trägervorrichtung 20 ist drehbar mit dem Sockel 10 verbunden und kann über eine hier nicht dargestellte rotatorische Antriebsvorrichtung relativ zum Sockel 10 um eine vertikal ausgerichtete Rotationsachse R verdreht werden.

Die Trägervorrichtung 20 selbst ist rahmenförmig gestaltet, wobei Seitenelemente des Rahmens durch je zwei separierte Seitenstreben 22 gebildet sind. Die Seitenstreben 22 vereinen sich sowohl an einer Unterseite der Trägervorrichtung 20 mit einem Bodenelement und an einer Oberseite mit einem Kopfelement 23.

Der so gestaltete rahmenförmige Aufbau der Trägervorrichtung 20 weist eine hohe Steifigkeit in Bezug auf Biegung und Torsion auf und ist damit besonders geeignet, die innerhalb des Rahmes angeordnete Handhabungseinrichtung 30 zu tragen.

Auf sich jeweils gegenüberliegenden Seiten der vier Seitenstreben 22 ist jeweils eine vertikal verlaufende Führungsschiene 24 (eine pro Seitenstrebe 22) angeordnet, an denen die Handhabungseinrichtung 30 bzw. ein Trägerelement 31 der Handhabungseinrichtung 30 verfahrbar entlang einer vertikalen Verfahrrichtung Y (Y-Richtung) gelagert ist. Die Führungsschienen 24 begrenzen damit die möglichen Relativbewegungen des Trägerelements 31 relativ zur Trägervorrichtung 20 auf eine Vertikalbewegung in Y-Richtung und gewährleisten zeitgleich eine optimale Lasteinleitung einer auf die Handhabungseinrichtung 30 wirkenden Belastung in die Trägervorrichtung 20, insbesondere eines durch das Gewicht der gehandhabten Werkstückpaletten 101a, 101b verursachten Kippmoments.

Ein Verfahren der Handhabungseinrichtung 30 erfolgt dabei über eine translatorische Antriebsvorrichtung mit Vertikalspindel 25, die über einen auf der Oberseite des Kopfelements 25 angeordneten Spindelantrieb 26 angetrieben wird.

Die vertikal entlang der Y-Richtung verfahrbare Handhabungseinrichtung 30 umfasst das mit der Trägervorrichtung 20 verfahrbar verbundene Trägerelement 31, eine darauf angeordnete Wechselvorrichtung 40 mit einem ersten und einem zweiten Aufnahmeplatz 44a und 44b für Werkstückpaletten sowie in der gegebenen Darstellung nicht gezeigte Entkopplungsvorrichtungen, über die die von der Handhabungseinrichtung 30 gehandhabten Werkstückpaletten 101a, 101b von der Wechselvorrichtung 40 entkoppelt werden können.

Die Wechselvorrichtung 40 kann mitsamt der beiden Aufnahmeplätze 44a, 44b horizontal entlang einer ersten Bewegungsrichtung X (X-Richtung) relativ zum Trägerelement 31 und damit auch zu Trägervorrichtung 20 verfahren werden, wobei der in Fig. 1 gezeigte Zustand einem ausgefahrenen Zustand entspricht, bei dem die im zweiten Aufnahmeplatz 44b aufgenommene zweite Werkstückpalette 101b in X-Richtung verfahren wurde, um diese beispielsweise an eine zur Aufnahme eingerichtete, hier nicht dargestellte Zielvorrichtung zu übergeben.

Es ist an dieser Stelle anzumerken, dass es sich bei den gewählten Richtungsbezeichnungen X und Y bzw. X-Richtung und Y-Richtung um keine einschränkenden sondern lediglich um willkürlich gewählte Bezeichnungen handelt, die der besseren Unterscheidbarkeit der einzelnen Richtungen dienen.

Eine Ausfahrmechanik der Wechselvorrichtung in X-Richtung basiert dabei auf einem doppelten Teleskopauszug, bei dem ein erster Teleskopschlitten 46a relativ zum Trägerelement 31 austeleskopiert werden kann und ein zweiter Teleskopschlitten 46b wiederrum relativ zum ersten Teleskopschlitten 46b austeleskopiert werden kann. Die beiden Aufnahmeplätze 44a, 44b sind dabei auf dem zweiten Teleskopschlitten 46b angeordnet.

Im dargestellten ausgefahrenen Zustand ist die erste Werkstückpalette 101a von der Wechselvorrichtung 40 im Vorfeld entkoppelt worden, sodass der erste Aufnahmeplatz 44a leer ist.

Vor einer Verfahrbewegung der Wechselvorrichtung 40 in den dargestellten ausgefahrenen Zustand wurde die erste Werkstückpalette 101a durch die dem ersten Aufnahmeplatz 44a zugeordnete Entkopplungsvorrichtung von der Wechselvorrichtung 40 entkoppelt, sodass die Verfahrbewegung der Wechselvorrichtung 40 zum Erreichen des dargestellten Zustands nicht auf die entkoppelte erste Werkstückpalette 101a übertragen wurde, diese also an Ort und Stelle verblieb.

Fig. 1 zeigt klar, dass durch die Entkopplung der ersten Werkstückpalette 101a eine auf die Handhabungseinrichtung 30 und damit auf die komplette Handhabungsvorrichtung 100 wirkende Last im dargestellten ausgefahrenen Zustand erheblich reduziert wird. Der momentan leere erste Aufnahmeplatz 44a wäre ohne die Entkopplung durch die Entkopplungsvorrichtung ebenfalls mit einer Werkstückpalette, nämlich mit der ersten Werkstückpalette 101a, belegt, deren Gewichtskraft den Komplettaufbau zusätzlich belasten würde, insbesondere angesichts eines derartig langen Hebelarms im ausgefahrenen Zustand, der zwangsläufig zu einem verhältnismäßig hohen resultierenden Kippmoment führt.

Dies wird allerdings in vorteilhafter Weise durch die erfindungsgemäße Ausgestaltung mit den Entkopplungsvorrichtungen vermieden.

Überdies wirkt das Gewicht der entkoppelten Werkstückpalette 101a sogar als Gegengewicht gegenüber der auf der anderen Seite ausgefahrenen Wechselvorrichtung 40, sodass ein gegen gerichtetes Kippmoment zu einer zusätzlichen Reduktion des resultierenden Kippmoments führt.

Zur Handhabung von Werkstückpaletten - Aufnehmen und/oder Übergeben von Werkstückpaletten von und/oder an dafür eingerichtete Zielvorrichtungen - können die beiden Aufnahmeplätze 44a, 44b durch Verfahrbewegungen der Wechselvorrichtung 40 in X-Richtung, durch vertikale Verfahrbewegungen der kompletten Handhabungseinrichtung 30 in Y-Richtung oder durch Rotationen der Trägervorrichtung 20 inklusive Handhabungseinrichtung 30 um die Rotationsachse R räumlich positioniert werden. Die drei Verfahrmöglichkeiten bilden dabei ein zylindrisches Verfahrsystem, das eine räumliche Positionierung in allen drei Raumrichtungen (innerhalb der möglichen Reichweite) gestattet.

Die Handhabungsvorrichtung 100 ist überdies zur Interaktion mit dem Palettenspeicher 200 und der Rüststation 300 des Handhabungssystems 1000 eingerichtet, dergestalt, dass die Handhabungsvorrichtung 100 dazu eingerichtet ist, Werkstückpaletten 101 von Speicherplätzen 220 des Palettenspeichers 200 oder von der Rüststation 300 in die Handhabungseinrichtung 30 bzw. die Wechselvorrichtung 40 aufzunehmen oder von der Handhabungseinrichtung 30 bzw. der Wechselvorrichtung 40 an diese zu übergeben.

Der Palettenspeicher 200 umfasst dabei mehrere Speicherebenen 210, die in unterschiedlichen Höhen teilkreisförmig um die Handhabungsvorrichtung 100 angeordnet sind, wobei auf jeder Speicherebene 210 mehrere der zur Aufnahme von Werkstückpaletten 101 eingerichteten Speicherplätze 220 angeordnet sind, die jeweils innerhalb der Reichweite des zylindrische Verfahrsystems der Handhabungsvorrichtung 100 liegen.

Aus Darstellungsgründen sind Tragvorrichtungen der einzelnen Speicherebenen 210 in Fig. 1 nicht gezeigt.

Die Rüststation 300 ist neben der Handhabungsvorrichtung 100 ebenfalls auf der Bodenfläche aufgestellt und umfasst eine oberseitig angeordnete Palettenaufnahme 310, die zur Aufnahme von Werkstückpaletten 101 eingerichtet ist.

An der auf der Rüststation 300 aufgenommenen Werkstückpalette 101 können dabei bevorzugt Rüstarbeiten durchgeführt werden, z.B. ein Aufspannen eines Werkstücks.

Das gezeigte erfindungsgemäße Handhabungssystem 1000 ermöglicht die schnelle und effiziente Handhabung einer Vielzahl von Werkstückpaletten 101, 101a, 101b mit Hilfe der Handhabungsvorrichtung 100, deren vorteilhafte Ausgestaltung eine Belastung der Handhabungsvorrichtung 100 durch die üblicherweise sehr schweren Werkstückpaletten erheblich reduziert, insbesondere bei einer zeitgleichen Handhabung zweier aufgenommener Werkstückpaletten 101a und 101b.

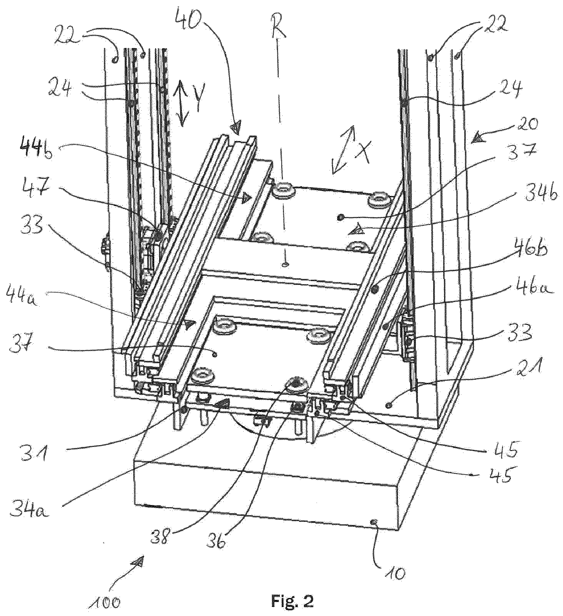

Fig. 2 zeigt einen unteren Teil einer im Wesentlichen der Handhabungsvorrichtung des Handhabungssystems aus Fig. 1 entsprechenden Handhabungsvorrichtung 100 in einem mit Werkstückpaletten unbeladenen und nicht ausgefahrenen Zustand der Wechselvorrichtung 40, also in einem Ausgangszustand der Wechselvorrichtung 40.

Der Ausgangszustand kennzeichnet sich dadurch, dass in diesem die Entkopplung durch die Handhabungseinrichtung 30 gehandhabter Werkstückpaletten mit Hilfe einer ersten und einer zweiten Entkopplungsvorrichtung 34a und 34b vorgenommen werden kann. Der Ausgangszustand beschränkt sich dabei lediglich auf eine bestimmte Position bzw. Ausgangsposition der Wechselvorrichtung in X-Richtung, wohingegen eine Positionierung der Handhabungseinrichtung 30 in Y-Richtung oder der Trägervorrichtung 20 um die Rotationsachse R nicht relevant für den besagten Ausgangszustand ist.

In Ergänzung zur Beschreibung der in Fig. 1 gezeigten Ausführungsform sind in Fig. 2 mit dem Trägerelement 31 verbundene Linearschlitten 33 gezeigt, die in die Führungsschienen 24 an den Seitenstreben 22 der Trägervorrichtung eingreifen und die Handhabungseinrichtung 30 verfahrbar in Y-Richtung lagern.

Zudem zeigt Fig. 2 das in der Darstellung in Fig. 1 verdeckte Bodenelement 21 der Trägervorrichtung mit dem darunterliegenden Sockel 10.

Ferner sind in Ergänzung zur Beschreibung der in Fig. 1 gezeigten Ausführungsform insbesondere die beiden Entkopplungsvorrichtungen 34a, 34b für die beiden Aufnahmeplätze 44a, 44b der Wechselvorrichtung 40 sowie eine detaillierte Ansicht der Teleskopmechanik der Wechselvorrichtung 40 im Ausgangszustand gezeigt.

Die Entkopplungsvorrichtungen 34a, 34b sind im Ausgangszustand der Wechselvorrichtung 40 jeweils unterhalb der Aufnahmeplätze 44a, 44b angeordnet und umfassen jeweils mehrere auf dem Trägerelement 31 angeordnete Hubelemente 36 mit Antriebsvorrichtungen, über die eine Hubplatte 37 in vertikaler Richtung relativ zum Trägerelement 31 in einer Hubbewegung aufwärts und in einer Absenkbewegung abwärts bewegt werden kann, um so einen Kontakt zur der im jeweils darüberliegenden Aufnahmeplatz 44a, 44b aufgenommenen Werkstückpalette herzustellen und diese anzuheben oder die Werkstückpalette zurück in den Aufnahmeplatz 44a, 44b abzusenken.

Die als elektrische Linearaktoren ausgeführten Hubelemente 36 der Entkopplungsvorrichtungen 34a, 34b verfahren die Hubplatten 37 in vertikaler Richtung und entkoppeln im Ausgangszustand der Wechselvorrichtung 40 auf diese Weise eine darüber liegende Werkstückpalette so, dass anschließende Verfahrbewegungen der Wechselvorrichtung 40 in X-Richtung nicht länger auf die entkoppelte Werkstückpalette übertragen werden.

Auf Oberseiten der Hubplatten 37 sind jeweils vier symmetrisch angeordnete Aufnahmen 38 für konenförmige Positionierungsmittel angeordnet, in die die entsprechenden Gegenstücke (Konen) auf einer Unterseite der Werkstückpaletten im Zuge einer Entkopplung durch die Hubbewegung aufgenommen werden. Dadurch ist eine Position und Orientierung einer entkoppelten Werkstückpalette im entkoppelten Zustand bzgl. der jeweiligen Entkopplungsvorrichtung 34a, 34b und damit auch bezüglich des Trägerelements 31 eindeutig festgelegt. In anderen Worten gibt es aufgrund der Positionierungsmittel nur eine mögliche Anordnung (Position und Orientierung) der entkoppelten Werkstückpalette auf der Hubplatte 37.

Die Wechselvorrichtung 40 wird durch den seitlich zwischen den Seitenstreben 22 angeordneten Antrieb 47 angetrieben, um Verfahrbewegungen bzw. ein Aus- oder Einteleskopieren der Wechselvorrichtung 40 zu bewirken. Die Wechselvorrichtung 40 kann dabei aus dem gezeigten Ausgangszustand in X-Richtung sowohl vom Betrachter weg als auch zum Betrachter hin verfahren werden (Darstellung durch Doppelpfeil der X-Richtung).

Der erste Teleskopschlitten 46a ist über eine Teleskopschiene 45 bzw. ein Paar von Teleskopschienen 45 in X-Richtung verfahrbar mit dem Trägerelement 31 verbunden. Auf dem ersten Teleskopschlitten 46a ist wiederum eine weitere (zweite) Teleskopschiene 45 bzw. ein zweites Paar Teleskopschienen 45 angeordnet, über die der zweite Teleskopschlitten 46b mit den Aufnahmeplätzen 44a, 44b gegenüber des ersten Teleskopschlittens 46a in X-Richtung verfahren werden kann.

Die Teleskopschlitten 46a, 46b sind dabei im zur X-Richtung senkrecht stehenden Querschnitt L-förmig gestaltet, um so eine hohe Biege- und Torsionssteifigkeit zu erzielen.

Der zweite Teleskopschlitten 46b ist überdies bei einer Betrachtungsrichtung entlang einer Vertikalen (Y-Richtung) H-förmig gestaltet mit einer mittigen Querstrebe und zwei daran angeordneten zu der zweiten Teleskopschiene 45 parallel verlaufenden Längsstreben, sodass ein Untergreifen von aufzunehmenden Werkstückpaletten nicht durch weitere Querstreben behindert wird.

Ferner weist der zweite Teleskopschlitten 46b an den beiden Aufnahmeplätzen 44a, 44b oberseitig auf den Längsstreben angeordnete Auflageabschnitte auf, auf denen eine aufgenommene Werkstückpalette später in einem eingekoppelten (nicht entkoppelten) Zustand aufliegt.

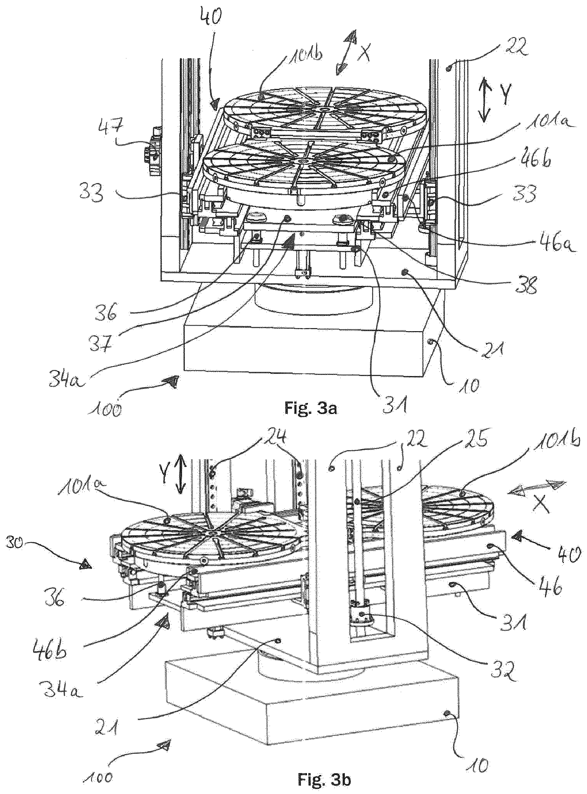

Fig. 3a zeigt den unteren Teil der Handhabungsvorrichtung 100 aus Fig. 2 in einem mit der ersten und der zweiten Werkstückpalette 101a und 101b beladenen und nicht ausgefahrenen Zustand der Wechselvorrichtung 40.

Die erste Werkstückpalette 101a ist im ersten Aufnahmeplatz 44a und die zweite Werkstückpalette 101b ist im zweiten Aufnahmeplatz 44b der Wechselvorrichtung 40 aufgenommen.

Die aufgenommenen Werkstückpaletten 101a, 101b liegen dabei beidseitig auf den oberseitig angeordneten Auflageabschnitten des zweiten Teleskopschlittens 46b auf. Das üblicherweise hohe Gewicht der aufgenommenen Werkstückpaletten 101a, 101b bewirkt dabei eine ebenfalls hohe Haftreibung zwischen den Werkstückpaletten 101a, 101b und dem zweiten Teleskopschlitten 46b, sodass eine Relativbewegung dieser auf dem zweiten Teleskopschlitten 46b bis zum Überschreiten einer Haftgrenze verhindert wird.

Fig. 3b zeigt den unteren Teil der Handhabungsvorrichtung 100 aus Fig. 3a mit teilweise angehobener erster Entkopplungsvorrichtung 34a in einer zu Fig. 3a unterschiedlichen Perspektive.

In Ergänzung zur Ansicht aus Fig. 3a ist in der Seitenperspektive in Fig. 3b die Vertikalspindel 25 für die Verfahrbewegungen der Handhabungseinrichtung 30 in Y-Richtung gezeigt, mit der die Handhabungseinrichtung 30 bzw. das Trägerelement 31 über eine Spindelmutter 32 verbunden ist, über die eine Rotation der Vertikalspindel 25 in eine vertikale Translationsbewegung der Handhabungseinrichtung 30 in Y-Richtung übersetzt wird. Die Vertikalspindel ist dabei selbsthemmend ausgeführt.

Überdies ist die dem ersten Aufnahmeplatz 44a zugeordnete erste Entkopplungsvorrichtung 34a in der gezeigten Darstellung bereits bis an die Unterseite der im ersten Aufnahmeplatz 44a aufgenommenen ersten Werkstückpalette 101a herangefahren, ohne diese vollständig von der Wechselvorrichtung 40 entkoppelt zu haben. Das Gewicht der ersten Werkstückpalette 101a ruht demnach zumindest noch teilweise auf der Wechselvorrichtung 40.

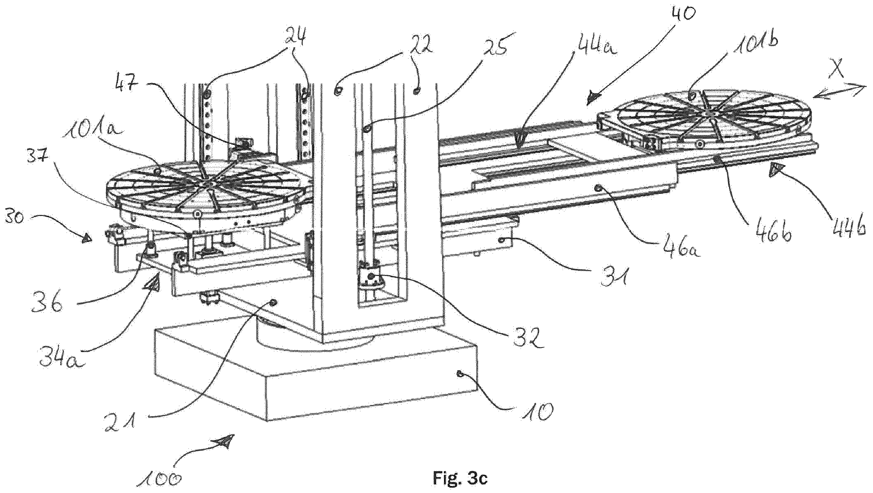

Die Hubelemente 43 haben hierzu die Hubplatte 37 gegenüber der in Fig. 3a gezeigten Konfiguration vertikal in Richtung der Unterseite der Werkstückpalette 101a angehoben. Ein Fortführen dieser Bewegung würde zu einer Entkopplung besagter erster Werkstückpalette 101a führen, wodurch letztendlich die in Fig. 3c gezeigten Konfiguration der Handhabungsvorrichtung 100 erreicht werden kann.

So zeigt Fig. 3c den unteren Teil der Handhabungsvorrichtung 100 aus Fig. 3a und 3b in einem ausgefahrenen Zustand der Wechselvorrichtung 40 und mit entkoppelter erster Werkstückpalette 101a.

Im gezeigten ausgefahrenen Zustand wurde durch den Antrieb 47 die Wechselvorrichtung 40 derart ausgefahren, dass der erste Teleskopschlitten 46a nahezu zur Hälfte gegenüber dem Trägerelement 31 verfahren wurde und der zweite Teleskopschlitten 46b wiederum nahezu zur Hälfte gegenüber dem ersten Teleskopschlitten 46b verfahren wurde.

Im gezeigten Zustand ist die erste Werkstückpalette 101a vollständig von der Wechselvorrichtung 40 entkoppelt bzw. entkoppelt worden, sodass diese im Zuge der Verfahrbewegung der Wechselvorrichtung 40 in X-Richtung nicht mitbewegt wurde, sondern ihre Position relativ zur Trägervorrichtung im Wesentlichen beibehalten hat.

Zur Entkopplung wurde die in Fig. 3b bereits angedeutete Hubbewegung der Hubelemente 36 fortgesetzt, sodass die erste Werkstückpalette 101a von den Auflageabschnitten des zweiten Teleskopschlittens 46a abgehoben wurde. Das Gewicht der entkoppelten ersten Werkstückpalette 101a ruht nun vollständig auf der Hubplatte 37 und wird über die fünf Hubelemente 36 der ersten Entkopplungsvorrichtung 34a gleichmäßig auf das Trägerelement 31 der Handhabungsvorrichtung 30 übertragen, wodurch die Wechselvorrichtung 40 selbst entlastet wird.

Die fünf Hubelemente 36 sind dabei symmetrisch bezüglich der Hubplatte 37 angeordnet mit vier jeweils in den Ecken der Hubplatte 37 befindlichen Hubelementen 36 und einem mittig angeordneten Hubelement 36, wodurch sowohl eine ungleichmäßige Belastung der Hubplatte 37 als auch der Hubelemente 36 selbst verhindert wird, unter der Voraussetzung das die entkoppelte Werkstückpalette 101a durch das Zusammenwirken der Positionierungsmittel und der zugehörigen Aufnahmen 38 mittig auf der Hubplatte 37 platziert wird.

Bedingt durch das Entkoppeln der ersten Werkstückpalette 101a wurde im Zuge der sich daran anschließenden Verfahrbewegung der Wechselvorrichtung 40 in X-Richtung lediglich der leere erste Aufnahmeplatz 44a gemeinsam mit dem zweite Aufnahmeplatz 44b inklusive der darin aufgenommenen zweiten Werkstückpalette 101b verfahren, um den in Fig. 3c dargestellten ausgefahrenen Zustand zu erreichen.

Ein durch das Gewicht der Werkstückpaletten 101a, 101b verursachtes Kippmoment fällt dabei konsequenterweise geringer aus als in einem Fall mit im ersten Aufnahmeplatz 44a aufgenommener (also vorher nicht entkoppelter) erster Werkstückpalette 101a.

Dadurch sinkt eine Belastung der Lagerung der Handhabungseinrichtung 30, insbesondere der dafür verwendeten Führungsschienen 24, sowie eine Belastung der die Handhabungseinrichtung 30 tragenden Trägervorrichtung, dem darunter liegenden Sockel 10 und der tragenden Bodenfläche. Dies führt zwangsläufig zu einer niedrigeren Beanspruchung (geringere Materialspannungen) als auch zu geringeren Bauteilverformungen, z.B. in Form von Biegung oder Torsion, was wiederum die Präzession bei der Handhabung der Werkstückpaletten 101a, 101b erhöht.

Insbesondere reduziert sich die mechanische Beanspruchung der im ausgefahrenen Zustand stark auf Biegung belasteten Teleskopmechanik 45, 46a, 46b der Wechselvorrichtung 40.

In anderen Worten kann durch die erfindungsgemäße Ausgestaltung eine mechanische Gesamtbelastung der Handhabungsvorrichtung 100 erheblich reduziert werden, ohne dabei auf die Möglichkeit der simultanen und präzisen Handhabung mehrerer Werkstückpaletten 101a, 101b verzichten zu müssen.

Es ist anzumerken, dass die Wechselvorrichtung 40 ebenso auch die erste Werkstückpalette 101a teleskopieren kann, wobei die zweite Werkstückpalette 101b durch die entsprechende zweite Entkopplungsvorrichtung 34b entkoppelt werden kann. Die Handhabungseinrichtung 30 ist derart symmetrisch aufgebaut, dass die Wechselvorrichtung 40 beidseitig ausgefahren werden kann, um entweder die erste Werkstückpalette 101a oder die zweite Werkstückpalette 101b auszufahren bzw. zu teleskopieren. Gleiches gilt natürlich für Verfahrbewegungen zurück in den Ausgangszustand.

Dadurch ist die einzelne Wechselvorrichtung 40 mit den zwei Aufnahmeplätzen 44a, 44b und einem einzigen Antrieb 47 für eine beidseitige Handhabung der zwei Werkstückpaletten 101a, 101b eingerichtet, wodurch Handhabungsprozesses schneller und flexibler gestaltet werden können, ohne dabei auf weitere zusätzliche Wechselvorrichtungen angewiesen zu sein.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der Ansprüche hervorgehen.

### Liste der Bezugszeichen

- 10: Sockel
- 20: rahmenförmige Trägervorrichtung
- 21: Bodenelement
- 22: Seitenstrebe
- 23: Kopfelement
- 24: Führungsschiene
- 25: Vertikalspindel
- 26: Spindelantrieb
- 30: Handhabungseinrichtung
- 31: Trägerelement
- 32: Spindelmutter
- 33: Linearschlitten
- 34a: Entkopplungsvorrichtung für ersten Aufnahmeplatz
- 34b: Entkopplungsvorrichtung für zweiten Aufnahmeplatz
- 36: Hubelement
- 37: Hubplatte
- 38: Aufnahme für konenförmige Positionierungsmittel
- 40: Wechselvorrichtung
- 44a: erster Aufnahmeplatz
- 44b: zweiter Aufnahmeplatz
- 45: Teleskopschiene
- 46a: erster Teleskopschlitten
- 46b: zweiter Teleskopschlitten
- 47: Antrieb für Wechselvorrichtung
- 100: Handhabungsvorrichtung
- 101: Werkstückpalette
- 101a: erste Werkstückpalette
- 101b: zweite Werkstückpalette
- 200: Palettenspeicher
- 210: Speicherebene
- 220: Speicherplatz für Werkstückpalette
- 300: Rüststation
- 310: Palettenaufnahme an Rüststation
- 1000: Handhabungssystem

- X: erste Bewegungsrichtung
- Y: vertikale Verfahrrichtung
- R: Rotationsachse

## Patentansprüche

1. Handhabungssystem (1000), umfassend:
eine Handhabungsvorrichtung (100), die
- eine Trägervorrichtung (20), und
- eine von der Trägervorrichtung (20) getragene Handhabungseinrichtung (30) zur Handhabung von Werkstückpaletten (101, 101a, 101b), die eine Wechselvorrichtung (40) mit mindestens zwei zur Aufnahme von Werkstückpaletten (101, 101a, 101b) eingerichteten Aufnahmeplätzen (44a, 44b) aufweist,
umfasst,
und die Handhabungseinrichtung (30) dazu eingerichtet ist, die Wechselvorrichtung (40) derart relativ zur Trägervorrichtung (20) entlang einer ersten Bewegungsrichtung (X) zu verfahren, dass beide Aufnahmeplätze (44a, 44b) gemeinsam verfahren werden,
**dadurch gekennzeichnet, dass**
die Handhabungseinrichtung (30) zusätzlich dazu eingerichtet ist, über mindestens eine Entkopplungsvorrichtung (34a, 34b) eine von der Handhabungseinrichtung (30) gehandhabte, in einem der zumindest zwei Aufnahmeplätze (44a, 44b) aufgenommene Werkstückpalette (101a, 101b) derart von der Wechselvorrichtung (40) zu entkoppeln, dass die entkoppelte Werkstückpalette (101a; 101b) ihre relative Position zur Trägervorrichtung (20) während eines Verfahrens der Wechselvorrichtung (40) entlang der ersten Bewegungsrichtung (X) im Wesentlichen beibehält.

2. Handhabungssystem (1000) nach Anspruch 1, **dadurch gekennzeichnet, dass** die Handhabungsvorrichtung (100) dazu eingerichtet ist, eine in einem der mindestens zwei Aufnahmeplätze (44a, 44b) aufgenommene Werkstückpalette (101a, 101b) an mindestens eine zur Aufnahme von Werkstückpaletten (101) eingerichtete Zielvorrichtung (220, 310) zu übergeben und/oder eine von der mindestens einen Zielvorrichtung (220, 310) aufgenommene Werkstückpalette (101) in einen der mindestens zwei Aufnahmeplätze (44a, 44b) aufzunehmen.

3. Handhabungssystem (1000) nach Anspruch 2, **dadurch gekennzeichnet, dass** die mindestens eine Zielvorrichtung eine in einem Arbeitsraum einer zum Handhabungssystem (1000) benachbart aufgestellten Werkzeugmaschine angeordnete Aufnahmevorrichtung ist.

4. Handhabungssystem (1000) nach einem der vorherigen Ansprüche, **dadurch gekennzeichnet, dass**
die mindestens eine Entkopplungsvorrichtung (34a, 34b) eine Hubvorrichtung (36) umfasst, die dazu eingerichtet ist, eine in einem der mindestens einen Entkopplungsvorrichtung (34a, 34b) zugeordneten Aufnahmeplatz (44a, 44b) aufgenommene Werkstückpalette (101a, 101b) durch eine vertikal gerichtete Hubbewegung von der Wechselvorrichtung (40) zu entkoppeln.

5. Handhabungssystem (1000) nach Anspruch 4, **dadurch gekennzeichnet, dass** die mindestens eine Entkopplungsvorrichtung (34a, 34b) zumindest eine Aufnahme für Positionierungsmittel (38) umfasst, die dazu eingerichtet ist, im Zuge der Hubbewegung derart in ein Positionierungsmittel, das auf einer Unterseite einer im zugeordneten Aufnahmeplatz (44a, 44b) aufgenommenen Werkstückpalette (101a, 101b) angeordnet ist, einzugreifen, dass eine Position und Orientierung der durch die Hubbewegung entkoppelten Werkstückpalette (101a; 101b) gegenüber der mindestens einen Entkopplungsvorrichtung (34a, 34b) eindeutig festgelegt ist.

6. Handhabungssystem (1000) nach einem der vorherigen Ansprüche, **dadurch gekennzeichnet, dass**
die Handhabungseinrichtung (30) mehrere Entkopplungsvorrichtungen (34a, 34b) umfasst, wobei jedem Aufnahmeplatz (44a, 44b) der Wechselvorrichtung (40) jeweils eine der mehreren Entkopplungsvorrichtungen (42a, 42b) zugeordnet ist.

7. Handhabungssystem (1000) nach einem der vorherigen Ansprüche, **dadurch gekennzeichnet, dass**
die Wechselvorrichtung (40) als horizontal ausfahrbare Teleskopvorrichtung ausgeführt ist, die mindestens einen relativ zu mindestens einer Teleskopschiene (45) der Teleskopvorrichtung horizontal in der ersten Bewegungsrichtung (X) verfahrbaren Teleskopschlitten (46b) umfasst, auf dem die mindestens zwei Aufnahmeplätze (44a, 44b) angeordnet sind.

8. Handhabungssystem (1000) nach einem der vorherigen Ansprüche, **dadurch gekennzeichnet, dass**
die Handhabungsvorrichtung (100) dazu eingerichtet ist, die Handhabungseinrichtung (30) relativ zur Trägervorrichtung (20) über eine translatorische Antriebsvorrichtung (25) entlang einer vertikal ausgerichteten Verfahrrichtung (Y) translatorisch zu verfahren.

9. Handhabungssystem (1000) nach Anspruch 8, **dadurch gekennzeichnet, dass** die Trägervorrichtung (20) rahmenförmig ausgestaltet ist mit einem Bodenelement (21), zwei Seitenelementen (22) und einem Kopfelement (23), wobei die zwei Seitenelemente (22) jeweils mindestens zwei Führungsschienen (24) umfassen, über die die von der Trägervorrichtung (20) getragene Handhabungseinrichtung (30) verfahrbar entlang der vertikal ausgerichteten Verfahrrichtung (Y) gelagert ist.

10. Handhabungssystem (1000) nach einem der Ansprüche 8 oder 9, **dadurch gekennzeichnet, dass**
die Handhabungsvorrichtung (100) weiterhin eine die Trägervorrichtung (20) tragende Sockelvorrichtung (10) umfasst, wobei die Handhabungsvorrichtung (100) dazu eingerichtet ist, die Trägervorrichtung (20) relativ zur Sockelvorrichtung (10) über eine rotatorische Antriebsvorrichtung um eine vertikal ausgerichtete Rotationsachse (R) zu verdrehen.

11. Handhabungssystem (1000) nach Anspruch 10, **dadurch gekennzeichnet, dass** die Handhabungsvorrichtung (100) dazu eingerichtet ist, einen der mindestens zwei Aufnahmeplätze (44a, 44b) durch Verfahrbewegungen der Handhabungseinrichtung (30) entlang der vertikal ausgerichteten Verfahrrichtung (Y) und/oder durch Verdrehbewegungen um die vertikal ausgerichtete Rotationsachse (R) und/oder durch Verfahrbewegungen der Wechselvorrichtung (40) entlang der ersten Bewegungsrichtung (X) derart gegenüber der mindestens einen Zielvorrichtung (220, 310) zu positionieren, dass eine von der Zielvorrichtung (220, 310) aufgenommene Werkstückpalette (101) von der Wechselvorrichtung (40) in dem positionierten Aufnahmeplatz (44a; 44b) aufgenommen und/oder eine im positionierten Aufnahmeplatz (41a; 41b) aufgenommene Werkstückpalette (101a; 101b) an die Zielvorrichtung (220, 310) übergeben werden kann.

12. Handhabungssystem (1000) nach einem der vorherigen Ansprüche, **dadurch gekennzeichnet, dass**
das Handhabungssystem (1000) einen Palettenspeicher (200) mit einer Vielzahl von zur Aufnahme von Werkstückplatten (101) eingerichteten Speicherplätzen (220) umfasst, die jeweils Zielvorrichtungen (220) für die Handhabungsvorrichtung (100) sind.

13. Handhabungssystem (1000) nach einem der vorherigen Ansprüche, **dadurch gekennzeichnet, dass**
das Handhabungssystem (1000) eine Andockvorrichtung umfasst, die zum Andocken eines fahrerlosen Transportfahrzeugs mit mindestens einer zur Aufnahme von Werkstückpaletten (101) eingerichteten Haltevorrichtung eingerichtet ist, wobei die mindestens eine Haltevorrichtung des Transportfahrzeugs in einem an die Andockvorrichtung angedockten Zustand eine Zielvorrichtung für die Handhabungsvorrichtung (100) ist.

14. Werkzeugmaschine, umfassend
- einen Arbeitsraum mit mindestens einer darin angeordneten, zur Aufnahme von Werkstückpaletten (101) eingerichteten Aufnahmevorrichtung;
- ein zum Arbeitsraum benachbart angeordnetes Handhabungssystem (1000) nach einem der Ansprüche 2 bis 13;
wobei die mindestens eine im Arbeitsraum angeordnete Aufnahmevorrichtung eine Zielvorrichtung des Handhabungssystems (1000) ist.

## Claims

1. A handling system (1000) comprising:
a handling device (100), including
- a carrier device (20), and
- a handling means (30) for handling workpiece pallets (101, 101a, 101b) which is carried by said carrier device (20) and includes a exchange device (40) with at least two receiving spaces (44a) configured for receiving workpiece pallets (101, 101a, 101b), 44b),
and said handling means (30) is configured to move said exchange device (40) relative to said carrier device (20) along a first direction of movement (X) in such a way that both receiving spaces (44a, 44b) are moved together,
**characterized in that**
said handling means (30) is further configured to decouple a workpiece pallet (101a, 101b) handled by said handling means (30) and received in one of the at least two receiving spaces (44a, 44b) by means of at least one decoupling device (34a, 34b) from said exchange device (40) such that the decoupled workpiece pallet (101a; 101b) substantially maintains its position relative to said carrier device (20) during a movement of said exchange device (40) along the first direction of movement (X).

2. The handling system (1000) according to claim 1, **characterized in that**
said handling device (100) is configured to transfer a workpiece pallet (101a, 101b) received in one of the at least two receiving spaces (44a, 44b) to at least one target device (220, 310) configured to receive workpiece pallets (101) and/or receive a workpiece pallet (101) received by the at least one target device (220, 310) in one of the at least two receiving spaces (44a, 44b).

3. The handling system (1000) according to claim 2, **characterized in that**
the at least one target device is a receiving device arranged in a work space of a machine tool set up adjacent to said handling system (1000).

4. The handling system (1000) according to one of the preceding claims, **characterized in that**
the at least one decoupling device (34a, 34b) comprises a lifting device (36) configured to decouple a workpiece pallet (101a, 101b) in a receiving space (44a, 44b) associated with the at least one decoupling device (34a, 34b) from said exchange device (40) by means of a vertically directed lifting movement.

5. The handling system (1000) according to claim 4, **characterized in that**
the at least one decoupling device (34a, 34b) comprises at least one receptacle for positioning means (38) which is configured, in the course of the lifting movement, to engage in a positioning means which is arranged on the lower side of a workpiece pallet (101a, 101b) such that a position and orientation of the workpiece pallet (101a; 101b) decoupled by the lifting movement relative to the at least one decoupling device (34a, 34b) is clearly defined.

6. The handling system (1000) according to one of the preceding claims, **characterized in that**
said handling means (30) comprises a plurality of decoupling devices (34a, 34b), each receiving space (44a, 44b) of said exchange device (40) being associated with one of the plurality of decoupling devices (42a, 42b).

7. The handling system (1000) according to one of the preceding claims, **characterized in that**
said exchange device (40) is configured as a horizontally extendable telescopic device, which comprises at least one telescopic carriage (46b) that can be moved horizontally in the first direction of movement (X) relative to at least one telescopic rail (45) of the telescopic device and on which the at least two receiving spaces (44a, 44b) are arranged.

8. The handling system (1000) according to one of the preceding claims, **characterized in that**
said handling device (100) is configured to move said handling means (30) in a translatory manner relative to said carrier device (20) along a vertically oriented direction of movement (Y) by means of a translatory drive device (25).

9. The handling system (1000) according to claim 8, **characterized in that**
said carrier device (20) is configured to be frame-shaped with a base element (21), two side elements (22) and a head element (23), wherein the two side elements (22) each comprise at least two guide rails (24) by which said handling means (30) carried by said carrier device (20) is mounted such that it can be moved along the vertically oriented direction of movement (Y).

10. The handling system (1000) according to one of claims 8 or 9, **characterized in that**
said handling device (100) further comprises a base device (10) carrying said carrier device (20), wherein said handling device (100) is configured to twist said carrier device (20) relative to said base device (10) via a rotary drive device about a vertically oriented axis of rotation (R).

11. The handling system (1000) according to claim 10, **characterized in that**
said handling device (100) is configured to position one of the at least two receiving spaces (44a, 44b) by movements of said handling means (30) along the vertically oriented direction of movement (Y) and/or by twisting movements about the vertically oriented axis of rotation (R) and/or by moving said exchange device (40) along the first direction of movement (X) in such a way relative to the at least one target device (220, 310) that a workpiece pallet (101) received by the target device (220, 310) can be received by said exchange device (40) in the positioned receiving space (44a; 44b) and/or a workpiece pallet (101a; 101b) received in the positioned receiving space (41a; 41b) can be transferred to the target device (220, 310).

12. The handling system (1000) according to one of the preceding claims, **characterized in that**
said handling system (1000) comprises a pallet storage (200) including a plurality of storage spaces (220) which are configured to receive workpiece pallets (101) and are each target devices (220) for said handling device (100).

13. The handling system (1000) according to one of the preceding claims, **characterized in that**
said handling system (1000) comprises a docking device configured to dock a driverless transport vehicle with at least one holding device configured to receive workpiece pallets (101), wherein the at least one holding device of the transport vehicle in a state of being docked to the docking device is a target device for said handling device (100).

14. A machine tool comprising
- a work space having at least one receiving device for receiving workpiece pallets (101) arranged therein;
- a handling system (1000) according to one of claims 2 to 13 arranged adjacent to the work space;
wherein the at least one receiving device arranged in the work space is a target device of said handling system (1000).

## Revendications

1. Système de manipulation (1000) comprenant :
un dispositif de manipulation (100), incluant
- un dispositif de support (20), et
- un moyen de manipulation (30) pour manipuler des palettes de pièces (101, 101a, 101b) qui est supporté par ledit dispositif de support (20) et inclut un dispositif d'échange (40) avec au moins deux espaces de réception (44a) configurés pour recevoir des palettes de pièces (101, 101a, 101b), 44b),
et ledit moyen de manipulation (30) est configuré pour déplacer ledit dispositif d'échange (40) par rapport audit dispositif de support (20) le long d'une première direction de déplacement (X) de telle manière que les deux espaces de réception (44a, 44b) sont déplacés ensemble,
**caractérisé en ce que**
ledit moyen de manipulation (30) est en outre configuré pour découpler une palette de pièce (101a, 101b) manipulée par ledit moyen de manipulation (30) et reçue dans l'un des au moins deux espaces de réception (44a, 44b) au moyen d'au moins un dispositif de découplage (34a, 34b) dudit dispositif d'échange (40) de telle manière que la palette de pièce découplée (101a ; 101b) maintient sensiblement sa position par rapport audit dispositif de support (20) pendant un déplacement dudit dispositif d'échange (40) le long de la première direction de déplacement (X).

2. Système de manipulation (1000) selon la revendication 1, **caractérisé en ce que**
ledit dispositif de manipulation (100) est configuré pour transférer une palette de pièce (101a, 101b) reçue dans l'un des au moins deux espaces de réception (44a, 44b) à au moins un dispositif cible (220, 310) configuré pour recevoir des palettes de pièces (101) et/ou recevoir une palette de pièce (101) reçue par l'au moins un dispositif cible (220, 310) dans l'un des au moins deux espaces de réception (44a, 44b).

3. Système de manipulation (1000) selon la revendication 2, **caractérisé en ce que**
l'au moins un dispositif cible est un dispositif de réception agencé dans un espace de travail d'une machine-outil installée de manière adjacente audit système de manipulation (1000).

4. Système de manipulation (1000) selon l'une des revendications précédentes, **caractérisé en ce que**
l'au moins un dispositif de découplage (34a, 34b) comprend un dispositif de levage (36) configuré pour découpler une palette de pièce (101a, 101b) dans un espace de réception (44a, 44b) associé à l'au moins un dispositif de découplage (34a, 34b) dudit dispositif d'échange (40) au moyen d'un mouvement de levage dirigé verticalement.

5. Système de manipulation (1000) selon la revendication 4, **caractérisé en ce que**
l'au moins un dispositif de découplage (34a, 34b) comprend au moins un logement pour un moyen de positionnement (38) qui est configuré, au cours du mouvement de levage, pour s'engager dans un moyen de positionnement qui est disposé sur le côté inférieur d'une palette de pièce (101a, 101b) de sorte qu'une position et orientation de la palette de pièce (101a ; 101b) découplée par le mouvement de levage par rapport à l'au moins un dispositif de découplage (34a, 34b) soit clairement définie.

6. Système de manipulation (1000) selon l'une des revendications précédentes, **caractérisé en ce que**
le moyen de manipulation (30) comprend une pluralité de dispositifs de découplage (34a, 34b), chaque espace de réception (44a, 44b) du dispositif d'échange (40) étant associé à l'un de la pluralité de dispositifs de découplage (42a, 42b).

7. Système de manipulation (1000) selon l'une des revendications précédentes, **caractérisé en ce que**
ledit dispositif d'échange (40) est configuré comme un dispositif télescopique extensible horizontalement, qui comprend au moins un chariot télescopique (46b) qui peut être déplacé horizontalement dans la première direction de déplacement (X) par rapport à au moins un rail télescopique (45) du dispositif télescopique et sur lequel les au moins deux espaces de réception (44a, 44b) sont agencés.

8. Système de manipulation (1000) selon l'une des revendications précédentes, **caractérisé en ce que**
ledit dispositif de manipulation (100) est configuré pour déplacer ledit moyen de manipulation (30) d'une manière translatoire par rapport audit dispositif de support (20) le long d'une direction de déplacement orientée verticalement (Y) au moyen d'un dispositif d'entraînement translatoire (25).

9. Système de manipulation (1000) selon la revendication 8, **caractérisé en ce que**
ledit dispositif de support (20) est configuré pour être en forme de cadre avec un élément de base (21), deux éléments latéraux (22) et un élément de tête (23), dans lequel les deux éléments latéraux (22) comprennent chacun au moins deux rails de guidage (24) par lesquels ledit moyen de manipulation (30) supporté par ledit dispositif de support (20) est monté de sorte qu'il puisse être déplacé le long de la direction de déplacement orientée verticalement (Y).

10. Système de manipulation (1000) selon l'une des revendications 8 ou 9, **caractérisé en ce que**
ledit dispositif de manipulation (100) comprend en outre un dispositif de base (10) supportant ledit dispositif de support (20), dans lequel ledit dispositif de manipulation (100) est configuré pour faire tourner ledit dispositif de support (20) par rapport audit dispositif de base (10) par l'intermédiaire d'un dispositif d'entraînement rotatif autour d'un axe de rotation orienté verticalement (R).

11. Système de manipulation (1000) selon la revendication 10, **caractérisé en ce que**
ledit dispositif de manipulation (100) est configuré pour positionner l'un des au moins deux espaces de réception (44a, 44b) par des mouvements dudit moyen de manipulation (30) le long de la direction de déplacement orientée verticalement (Y) et/ou par des mouvements de rotation autour de l'axe de rotation orienté verticalement (R) et/ou en déplaçant ledit dispositif d'échange (40) le long de la première direction de déplacement (X) de telle manière par rapport à l'au moins un dispositif cible (220, 310) qu'une palette de pièce (101) reçue par le dispositif cible (220, 310) puisse être reçue par ledit dispositif d'échange (40) dans l'espace de réception positionné (44a ; 44b) et/ou une palette de pièce (101a ; 101b) reçue dans l'espace de réception positionné (41a ; 41b) puisse être transférée au dispositif cible (220, 310).

12. Système de manipulation (1000) selon l'une des revendications précédentes, **caractérisé en ce que**
ledit système de manipulation (1000) comprend un stockage de palettes (200) incluant une pluralité d'espaces de stockage (220) qui sont configurés pour recevoir des palettes de pièces (101) et sont chacun des dispositifs cibles (220) pour ledit dispositif de manipulation (100).

13. Système de manipulation (1000) selon l'une des revendications précédentes, **caractérisé en ce que**
ledit système de manipulation (1000) comprend un dispositif d'arrimage configuré pour arrimer un véhicule de transport sans conducteur à au moins un dispositif de maintien configuré pour recevoir des palettes de pièces (101\), dans lequel l'au moins un dispositif de maintien du véhicule de transport dans un état d'arrimage au dispositif d'arrimage est un dispositif cible pour ledit dispositif de manipulation (100).

14. Machine-outil comprenant
- un espace de travail ayant au moins un dispositif de réception pour recevoir des palettes de pièces (101) agencées dans celui-ci ;
- un système de manipulation (1000) selon l'une des revendications 2 à 13 agencé de manière adjacente à l'espace de travail ;
dans laquelle l'au moins un dispositif de réception agencé dans l'espace de travail est un dispositif cible dudit système de manipulation (1000).
